(19) Europäisches Patentamt
European Patent Office
Office européen des brevets

(11) **EP 3 944 483 A1**

(12) **EUROPÄISCHE PATENTANMELDUNG**

(43) Veröffentlichungstag:
**26.01.2022  Patentblatt 2022/04**

(21) Anmeldenummer: **21186717.1**

(22) Anmeldetag: **20.07.2021**

(51) Internationale Patentklassifikation (IPC):
**H02M 3/335** (2006.01)    **H02P 25/022** (2016.01)
**H02M 1/08** (2006.01)    **H02M 3/338** (2006.01)

(52) Gemeinsame Patentklassifikation (CPC):
**H02M 3/33592; H02M 1/08; H02P 6/32;**
H02M 1/0006; H02M 3/3382

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **24.07.2020  DE 102020119598**

(71) Anmelder: **Universität Stuttgart**
**70174 Stuttgart (DE)**

(72) Erfinder:
• **Maier, David**
  **77815 Bühl (DE)**
• **Zimmer, Marco**
  **89077 Ulm (DE)**
• **Parspour, Nejila**
  **70839 Gerlingen (DE)**

(74) Vertreter: **Gagel, Roland**
**Patentanwalt Dr. Roland Gagel**
**Landsberger Strasse 480a**
**81241 München (DE)**

(54) **SCHALTUNGSANORDNUNG MIT AKTIVER GLEICHRICHTERSCHALTUNG UND DEREN ANWENDUNG IN EINER SYNCHRONMASCHINE**

(57) Die vorliegende Erfindung betrifft eine Schaltungsanordnung mit aktiver Gleichrichterschaltung, insbesondere auf einer Sekundärseite einer induktiven Energieübertragungsstrecke. Die Schaltungsanordnung weist eine Halb- oder Vollbrücke aus Leistungstransistoren ($Q_1$, $Q_2$) zur Gleichrichtung einer in einer Eingangsinduktivität ($L_2$) der Schaltungsanordnung induzierten Wechselspannung auf. Die Leistungstransistoren ($Q_1$, $Q_2$) sind so mit der Eingangsinduktivität ($L_2$) verschaltet, dass eine Hilfsspannung zum Schalten der Leistungstransistoren ($Q_1$, $Q_2$) aus der induzierten Wechselspannung abgezweigt wird. Dadurch können auch große Ströme übertragen werden, die zu einer geringen Ausgangsspannung führen, ohne den Betrieb der Gleichrichterschaltung zu gefährden.

Fig. 2

EP 3 944 483 A1

## Beschreibung

### Technisches Anwendungsgebiet

Die vorliegende Erfindung betrifft eine Schaltungsanordnung mit einer aktiven Gleichrichterschaltung, insbesondere für den Einsatz auf der Sekundärseite einer induktiven Energieübertragungsstrecke, mit einer Halb- oder Vollbrücke aus Leistungstransistoren zur Gleichrichtung einer in einer Eingangsinduktivität der Schaltungsanordnung induzierten Wechselspannung. Die Erfindung betrifft auch die Verwendung einer derartigen Schaltungsanordnung in einer elektrisch erregten Synchronmaschine.

Kontaktlose induktive Energieübertragungssysteme kommen inzwischen in zahlreichen Anwendungen zum Einsatz. Die in einem Primärschaltkreis bereitgestellte Energie wird dabei über wenigstens eine Primärspule induktiv auf wenigstens eine Sekundärspule in einem Sekundärschaltkreis übertragen. Die an der Sekundärspule induzierte Wechselspannung kann dann mit einer Gleichrichterschaltung in eine Gleichspannung umgesetzt werden. Diese Technik lässt sich auch in einer elektrisch erregten Synchronmaschine für die Energieübertragung zwischen Stator und Rotor nutzen. Dies hat insbesondere dann einen Vorteil gegenüber einer Energieübertragung mit Hilfe von Schleifringen, wenn mit Hilfe der induktiven Energieübertragung in einem kleineren Bauraum eine höhere Stromstärke auf die rotierende Welle übertragen werden kann. Ein klassischer Schleifring benötigt für eine höhere Stromstärke eine größere Auflagefläche des Schleifrings auf der Welle und damit einen größeren axialen Bauraum, um die zulässige Stromdichte des Schleifringkontaktes nicht zu überschreiten. Außerdem ist der mechanische Verschleiß sehr hoch. Ein induktives Energieübertragungssystem kann demgegenüber unabhängig vom Bauraum durch Variation des Wicklungsverhältnisses zwischen Primär- und Sekundärspule eine nahezu beliebig hohe Stromstärke auf der rotierenden Welle bereitstellen und zeigt keine mechanische Abnutzung.

Für die Auslegung von Rotoren elektrisch erregter Synchronmaschinen ist es vorteilhaft, eine geringere Windungszahl mit entsprechend höherer Stromstärke zu nutzen. Da im Rotor jede einzelne Wicklung mit einem Lackdraht isoliert ist, steigt der Kupferfüllfaktor im Rotor mit abnehmender Windungszahl, da die Lackmenge in Summe abnimmt. In einem vorgegebenen Bauraum kann deshalb bei einem höheren Füllfaktor ein größeres magnetisches Feld generiert werden. Allerdings treten bei Nutzung der kontaktlosen induktiven Energieübertragung von hohen Strömen sehr niedrige Spannungen auf der Sekundärseite auf, welche dann nicht mehr ausreichend hoch sind, um eine aktive Gleichrichterschaltung zu versorgen. Bei Nutzung einer einfachen Wicklung mit nur wenigen Windungen auf dem Rotor beträgt die benötigte Rotorerregung für einen Motor mit 150 kW beispielsweise 1500 W, entsprechend 100 A und 15 V. Im Teillastbereich wird der Rotorstrom verringert, so dass bei einer Stromstärke von 50 A nur noch eine Spannung von 7,5 V anliegt. Diese geringen Spannungen sind für das Schalten eines aktiven Gleichrichters jedoch nicht mehr ausreichend. Die Nutzung von passiven Gleichrichtern ist aufgrund des Spannungsverlustes über den Dioden der Gleichrichterschaltung bei einer derartigen Anwendung keine Option, da die Verlustleistung bei den niedrigen Ausgangsspannungen zu hoch ist. Beispielsweise entsteht bei einem Rotorstrom von 100 A an einer konventionellen Diode mit 0,7 V Vorwärtsspannung eine inakzeptable Verlustleistung von 70 W.

### Stand der Technik

In der Dissertation von E. M. Illiano, "Design of a highly efficient brushless current excited synchronous motor for automotive purposes", ETH Zürich, Nr. 22393, 2014, wird vorgeschlagen, eine zusätzliche Windung in das Energieübertragungssystem der Synchronmaschine einzubauen, um eine ausreichende Spannung zum Schalten eines Leistungsschalters zu erzeugen bzw. den Rotor schnell zu demagnetisieren. Das Einbringen einer zusätzlichen Windung oder eines zweiten Energieübertragungssystems ist generell eine Möglichkeit zur Bereitstellung einer zusätzlichen Spannung, erfordert jedoch auch einen zusätzlichen hohen Aufwand.

Ein Beispiel für eine aktive Gleichrichterschaltung ist in der DE 202007011745 U1 beschrieben. Hierbei handelt es sich um einen sog. Royer-Konverter, der neben dem Betrieb als Wechselrichter auch als aktiver Gleichrichter betrieben werden kann. Die Spannung für die Gates der in diesem Royer-Konverter eingesetzten MOSFET-Steuertransistoren und damit zum Schalten der Leistungstransistoren wird mittels einer Zehnerdiode an der Zwischenkreisspannung abgegriffen. Die Nutzung einer derartigen aktiven Gleichrichterschaltung auf der Sekundärseite eines induktiven Energieübertragungssystems bei Übertragung hoher Stromstärken ist allerdings nicht möglich, da die Zwischenkreisspannung im Fall hoher Stromstärken für eine zuverlässige Ansteuerung der Steuertransistoren zu gering ist.

Die Aufgabe der vorliegenden Erfindung besteht darin, eine Schaltungsanordnung mit aktiver Gleichrichterschaltung anzugeben, die sich auf der Sekundärseite einer induktiven Energieübertragungsstrecke auch bei der Übertragung hoher Ströme mit geringem zusätzlichen Aufwand einsetzen lässt.

### Darstellung der Erfindung

Die Aufgabe wird mit der Schaltungsanordnung gemäß Patentanspruch 1 gelöst. Vorteilhafte Ausgestaltungen der Schaltungsanordnung sind Gegenstand der abhängigen Patenansprüche oder lassen sich der nachfolgenden Beschreibung sowie den Ausführungsbeispielen entnehmen.

Die vorgeschlagene Schaltungsanordnung mit einer aktiven Gleichrichterschaltung weist in bekannter Weise eine Halb- oder Vollbrücke aus Leistungstransistoren, vorzugsweise MOSFET-Leistungstransistoren, zur Gleichrichtung einer in einer Eingangsinduktivität der Schaltungsanordnung induzierten Wechselspannung auf. Durch eine Parallelschaltung der Eingangsinduktivität mit einer Kapazität wird ein Schwingkreis gebildet. Die Schaltungsanordnung zeichnet sich dadurch aus, dass die Leistungstransistoren so mit der Eingangsinduktivität verschaltet sind, dass aus dem Schwingkreis bzw. der darin induzierten Wechselspannung eine Spannung, hier als Hilfsspannung bezeichnet, zum Schalten der Leistungstransistoren abgezweigt wird. Hierbei wird ausgenutzt, dass die in der Eingangsinduktivität induzierte Spannung in ihrem Scheitelwert ein Vielfaches der Ausgangsspannung des aktiven Gleichrichters beträgt. Da für das Schalten der Leistungstransistoren so gut wie keine Energie benötigt wird, kann dieser Spitzenwert zum Steuern des Schaltvorganges herangezogen werden.

Damit lässt sich die vorgeschlagene Schaltungsanordnung auch auf der Sekundärseite einer induktiven Energieübertragungsstrecke einsetzen, wenn sehr hohe Ströme übertragen werden sollen, bei denen die Ausgangs- oder Zwischenkreisspannung nicht mehr zum Schalten der Leistungstransistoren des aktiven Gleichrichters ausreicht. Die vorgeschlagene Schaltungsanordnung benötigt dabei keinerlei zusätzliche Spulen, sondern lässt sich einfach über einen geeigneten Abgriff der induzierten Wechselspannung realisieren. Die Eingangsinduktivität der Schaltungsanordnung ist mit einer Kapazität parallel kompensiert und die Hilfsspannung zum Schalten der Leistungstransistoren wird von dem durch die Parallelschaltung aus der Eingangsinduktivität und der Kapazität gebildeten Schwingkreis abgezweigt.

Die aktive Gleichrichterschaltung der vorgeschlagenen Schaltungsanordnung wird vorzugsweise als Royer-Konverter ausgebildet. Diese bevorzugte Ausgestaltung der Schaltungsanordnung weist die Eingangsinduktivität, insbesondere in Form einer oder mehreren in Reihe geschalteten Spulen, mit einer parallel dazu verschalteten ersten Kapazität auf, die einen Schwingkreis bilden. Ein erster der Leistungstransistoren der aktiven Gleichrichterschaltung ist so verschaltet, dass er eine schaltbare elektrische Verbindung zwischen einer ersten Seite der Eingangsinduktivität und einem ersten Pol des Ausgangsanschlusses der Gleichrichterschaltung herstellt. Ein zweiter der Leistungstransistoren stellt entsprechend eine schaltbare elektrische Verbindung zwischen der zweiten Seite der Eingangsinduktivität und dem ersten Pol des Ausgangsanschlusses her. Zwei Steuertransistoren, vorzugsweise MOSFET-Steuertransistoren, der aktiven Gleichrichterschaltung dienen der Ansteuerung der Leistungstransistoren. Hierzu ist der Drainanschluss des ersten Steuertransistors mit dem Drainanschluss des ersten Leistungstransistors und der Sourceanschluss des ersten Steuertransistors mit dem Gateanschluss des zweiten Leistungstransistors verbunden. Der Drainanschluss des zweiten Steuertransistors ist mit dem Drainanschluss des zweiten Leistungstransistors und der Sourceanschluss des zweiten Steuertransistors mit dem Gateanschluss des ersten Leistungstransistors verbunden. Ein Mittenabgriff an der Eingangsinduktivität oder beide Seiten der Eingangsinduktivität des Schwingkreises sind über jeweils eine Drosselspule mit dem zweiten Pol des Ausgangsanschlusses verbunden. Diese bevorzugte Schaltungsanordnung zeichnet sich dadurch aus, dass die Gateanschlüsse der ersten und zweiten Steuertransistoren über wenigstens einen Widerstand und eine Diode mit wenigstens einer Seite der Eingangsinduktivität des Schwingkreises und über eine Parallelschaltung aus einer zweiten Kapazität und einer Zehnerdiode mit dem ersten Pol des Ausgangsanschlusses verbunden sind. Vorzugsweise sind diese Gateanschlüsse der ersten und zweiten Steuertransistoren nicht nur mit einer Seite, sondern jeweils über einen Widerstand und eine Diode mit beiden Seiten der Eingangsinduktivität des Schwingkreises verbunden, um einen möglichst symmetrischen Schaltungsaufbau zu erhalten. Über diese Verbindung mit dem Schwingkreis wird die Hilfsspannung für die Ansteuerung der Steuertransistoren und damit das Schalten der Leistungstransistoren bereitgestellt.

In einer Weiterbildung dieser Schaltungsanordnung sind zusätzlich die Gateanschlüsse der ersten und zweiten Leistungstransistoren entweder über eine Reihenschaltung aus einer weiteren Zehnerdiode und einer weiteren Diode oder über eine bidirektionale Zehnerdiode mit dem ersten Pol des Ausgangsanschlusses verbunden. Die weitere Zehnerdiode ist dabei so verschaltet, dass ein Stromfluss vom Gateanschluss des jeweiligen Leistungstransistors zum ersten Pol des Ausgangsanschlusses bis zum Erreichen der Zenerspannung gesperrt wird, die weitere Diode in entgegengesetzter Richtung. Die weitere Zenerdiode verhindert eine zu hohe Spannung am jeweiligen Gate, wie sie unter bestimmten Bedingungen anliegen könnte. Weiterhin wird durch die weitere Diode ein unerwünschter Stromfluss über die Body-Dioden der Steuertransistoren sowie der Zenerdiode verhindert, der zu einer Zerstörung der Bauteile führen könnte. Alternativ zu der Reihenschaltung aus Zehnerdiode und Diode kann auch eine bidirektionale Zehnerdiode eingesetzt werden.

Die vorgeschlagene Schaltungsanordnung lässt sich auf einem Rotor einer Synchronmaschine einsetzten, bei der eine induktive Energieübertragung über die Eingangsinduktivität der Schaltungsanordnung auf den Rotor erfolgen soll. Insbesondere kann der Rotor mit geringer Windungszahl und entsprechend hohem Kupferfüllfaktor ausgebildet werden, da die Übertragung und Gleichrichtung einer hohen Stromstärke mit der vorgeschlagenen Schaltungsanordnung ermöglicht wird. Die Rotorwicklung wird dabei durch die eine oder mehrere Drosselspulen der vorgeschlagenen Schaltungsanordnung gebildet. Grundsätzlich lässt sich die vorgeschlagene Schaltungsanordnung in allen kontaktlosen, induktiven Energieübertragungsstrecken einsetzen und zeigt insbesondere dann Vorteile, wenn hohe Ströme übertragen werden sollen.

**Kurze Beschreibung der Zeichnungen**

Die vorgeschlagene Schaltungsanordnung wird nachfolgend anhand von Ausführungsbeispielen in Verbindung mit den Zeichnungen nochmals näher erläutert. Hierbei zeigen:

Fig. 1     ein Beispiel für eine Schaltungsanordnung mit aktiver Gleichrichterschaltung in Form eines Royer-Konverters gemäß dem Stand der Technik;

Fig. 2     ein erstes Beispiel für eine Ausgestaltung der vorgeschlagenen Schaltungsanordnung;

Fig. 3     ein zweites Beispiel für eine Ausgestaltung der vorgeschlagenen Schaltungsanordnung;

Fig. 4     ein weiteres Beispiel für eine Ausgestaltung der vorgeschlagenen Schaltungsanordnung; und

Fig. 5     ein Beispiel für den Aufbau einer induktiven Energieübertragungsstrecke, in der die vorgeschlagene Schaltungsanordnung zum Einsatz kommen kann.

**Wege zur Ausführung der Erfindung**

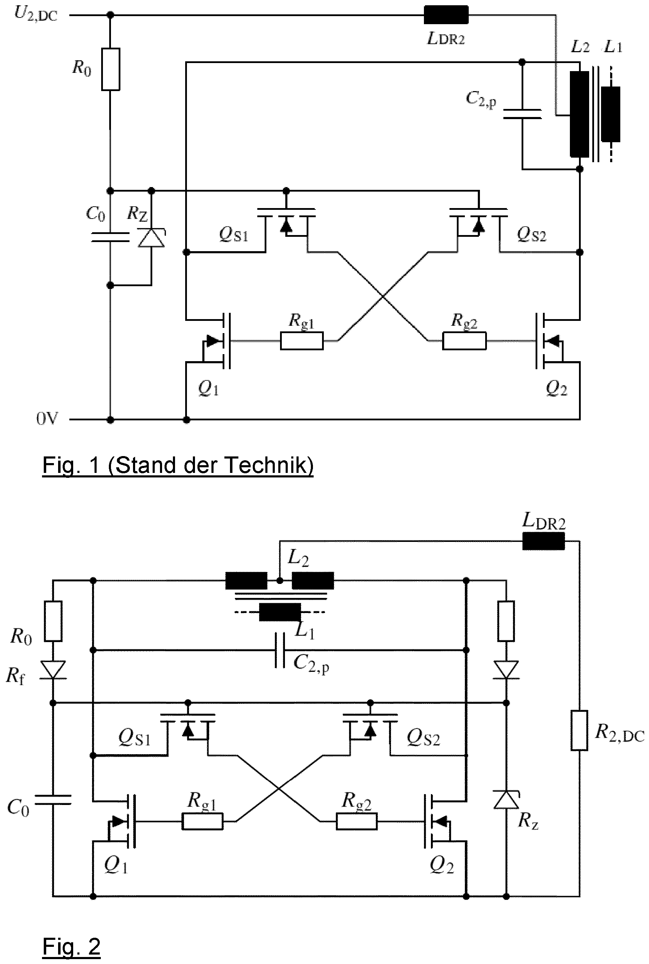

Eine vorteilhafte Ausgestaltung der vorgeschlagenen Schaltungsanordnung basiert auf einer Schaltung, wie sie bspw. aus der DE 202007011745 U1 bekannt ist. Figur 1 zeigt diese Schaltung des Standes der Technik, die einen sog. Royer-Konverter verwendet. Der Royer-Konverter weist zwei MOSFET-Leistungstransistoren $Q_1$, $Q_2$ auf, die jeweils eine Seite der Eingangsinduktivität $L_2$ schaltbar mit einem Pol des Gleichspannungsanschlusses verbinden. Die beiden MOSFET-Leistungstransistoren $Q_1$, $Q_2$ werden über zwei MOSFET-Steuertransistoren $Q_{S1}$, $Q_{S2}$ angesteuert. Hierzu ist der Drainanschluss eines der Steuertransistoren $Q_{S1}$ mit dem Drainanschluss des ersten Leistungstransistors $Q_1$ und der Sourceanschluss dieses Steuertransistors $Q_{S1}$ über einen Widerstand $R_{g2}$ mit dem Gateanschluss des zweiten Leistungstransistors $Q_2$ verbunden. Der Drainanschluss des anderen Steuertransistors $Q_{S2}$ ist wiederum mit dem Drainanschluss des zweiten Leistungstransistors $Q_2$ und der Sourceanschluss über einen Widerstand $R_{g1}$ mit dem Gateanschluss des ersten Leistungstransistors $Q_1$ verbunden, wie dies aus der Figur 1 ersichtlich ist. Die Spannung für die Gates der beiden Steuertransistoren $Q_{S1}$, $Q_{S2}$ werden bei dieser Schaltung mittels Zehnerdiode $R_Z$ an der Zwischenkreisspannung $U_{2,DC}$ abgegriffen. Ein Mittelabgriff an der Eingangsinduktivität $L_2$ ist über eine Drosselspule $L_{DR2}$ mit dem zweiten Pol des Gleichspannungsanschlusses verbunden. Die Eingangsinduktivität $L_2$ ist über die parallel geschaltete Kapazität $C_{2,p}$ parallel kompensiert. Die beiden Pole des Gleichspannungsanschlusses sind über eine Reihenschaltung aus einem Widerstand $R_0$ und einer Parallelschaltung aus einer Kapazität $C_0$ und der Zehnerdiode $R_Z$ verbunden. Diese Schaltung kann neben dem Betrieb als Wechselrichter auch als aktiver Gleichrichter betrieben werden. In beiden Fällen kann die Drossel $L_{DR2}$ sowohl, wie in der Figur 1 dargestellt, als ein Bauteil mit Mittelabgriff an der Eingangsinduktivität (Spule $L_2$) oder auch in Form von zwei Drosseln ohne Mittelabgriff in der Spule $L_2$ ausgeführt werden.

Bei Verwendung dieser Schaltung als Wechselrichter ist es notwendig, zunächst eine Versorgungsspannung an den Gates anliegen zu haben, damit darauf die Schaltung autoresonant anfangen kann zu schwingen. Anderenfalls sperren die Steuertransistoren $Q_{S1}$, $Q_{S2}$, so dass die Leistungstransistoren $Q_1$, $Q_2$ nicht in den leitenden Zustand übergehen können. Im Fall des Betriebs als Gleichrichter kommen die in der Figur 1 nicht dargestellten, aber in den Leistungstransistoren $Q_1$ und $Q_2$ vorhandenen Dioden zum Einsatz. Durch diese kann die Schaltung zuerst passiv als Gleichrichter arbeiten, bevor kurze Zeit später am Ausgang $U_{2,DC}$ eine Zwischenkreisspannung anliegt, welche wiederum die Steuertransistoren $Q_{S1}$ und $Q_{S2}$ versorgt, so dass die Schaltung nun als aktiver Gleichrichter arbeitet. Die Zeitspanne bis zur aktiven Gleichrichtung beträgt wenige Schwingungen und ist daher durch die passiven Bauelemente tolerierbar. Jedoch liegt am Gleichspannungsanschluss wie anfänglich beschrieben bei einem sehr hohen Strom nur eine sehr geringe Ausgangsspannung $U_{2,DC}$ an, welche nicht in jedem Betriebspunkt ausreichend hoch ist, um die Gates zuverlässig zu schalten. Dies wird erst mit einer Ausgestaltung der Schaltungsanordnung gemäß der vorliegenden Erfindung möglich.

Figur 2 zeigt hierzu ein Beispiel der vorgeschlagenen Schaltungsanordnung mit aktiver Gleichrichterschaltung, die eine Modifikation der aus dem Stand der Technik gemäß Figur 1 bekannten Schaltung darstellt. Die Modifikation betrifft in erster Linie die Generierung der Versorgungsspannung zum Schalten der MOSFET-Leistungstransistoren $Q_1$, $Q_2$, in der vorliegenden Patentanmeldung auch als Hilfsspannung bezeichnet. Diese wird bei der vorgeschlagenen Schaltungsanordnung über den Schwingkreis aus der Eingangsinduktivität $L_2$ und der parallel geschalteten Kapazität $C_{2,p}$ generiert. Die Spannung im Schwingkreis beträgt in ihrem Scheitelwert das Vielfache der Zwischenkreisspannung, also der Spannung $U_{2,DC}$ am Ausgangsanschluss des aktiven Gleichrichters (Spannung über $R_{2,DC}$). Da für die Gate-Ansteuerung so gut wie keine Energie benötigt wird, kann der Spitzenwert der Spannung im Schwingkreis zum Steuern der Gates verwendet werden. Um keine zusätzlichen Effekte auf die Schaltung auszuüben, wurde in den vorliegenden Beispielen eine symmetrische Schaltung auf beiden Seiten des Kondensators bzw. der Kapazität $C_{2,p}$ gewählt. Es ist auch möglich, nur einen Abgriff zu realisieren.

Für den Abgriff im Schwingkreis wird zusätzlich zum Widerstand $R_0$ noch eine Diode $R_f$ notwendig, da unter keinen Umständen die Versorgungsspannung der Steuertransistoren $Q_{S1}$, $Q_{S2}$ beim Abschalten von $U_{2,DC}$ und vor dem Ausklingen der Schwingung oder während der negativen Halbwellen der Schwingkreisspannung kleiner als die Gate-Threshold-Spannung der Steuertransistoren $Q_{S1}$, $Q_{S2}$ werden darf. Andererseits würde durch den Spannungsanstieg in der Eingangsinduktivität $L_2$ aufgrund des nichtleitenden Zustandes der Leistungstransistoren $Q_1$ und $Q_2$ mindestens einer der beiden Transistoren zerstört. Die Diode $R_f$ verhindert diesen Zustand, indem sie die Entladung der Kapazität $C_0$ parallel zur Zehnerdiode beim Ausschalten der Versorgungs- bzw. Ausgangsspannung $U_{2,DC}$ verhindert.

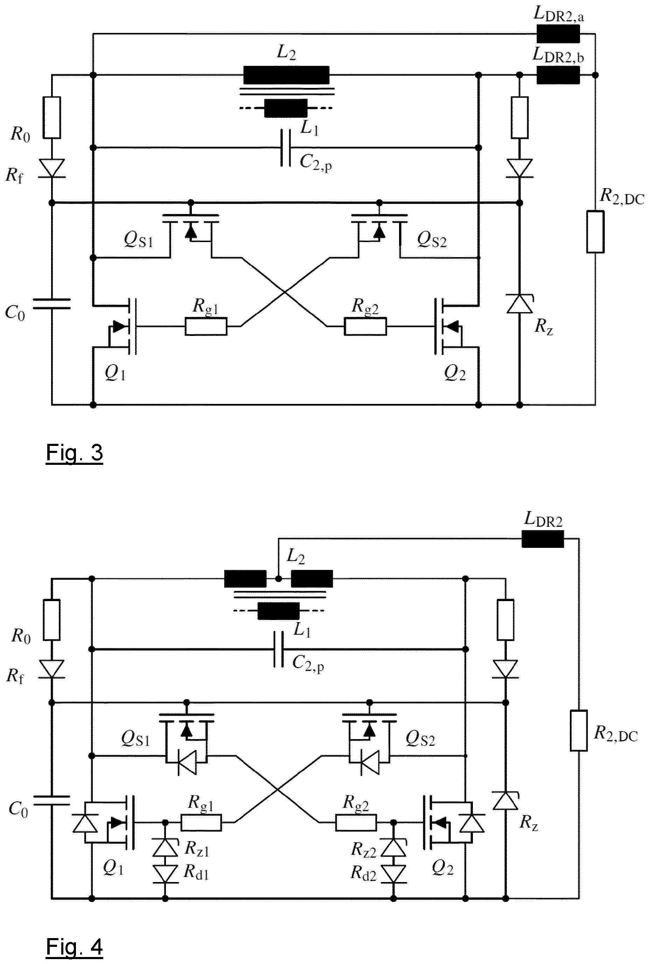

Figur 3 zeigt eine Modifikation der vorgeschlagenen Schaltungsanordnung der Figur 2, bei der kein Mittenabgriff an der Eingangsinduktivität $L_2$ erfolgt, sondern die beiden Seiten dieser Induktivität über zwei getrennte Drosselspulen $L_{DR2,a}$, $L_{DR2,b}$ mit dem zweiten Pol des Ausgangsanschlusses verbunden werden. Bei Anwendung dieser Schaltungsanordnung am Rotor einer Synchronmaschine wird die Rotorwicklung durch diese beiden Drosselspulen gebildet. Es handelt sich dann um eine geteilte Rotorwicklung, bspw. für eine mehrpolige Maschine. Auf den Serienwiderstand der Rotorwicklung wurde verzichtet, die Widerstände sind als Ersatzwiderstand durch $R_{2,DC}$ abgebildet. Im Falle des Beispiels der Figur 2 wird durch die Drosselspule $L_{DR2}$ lediglich eine Rotorwicklung gebildet.

Figur 4 zeigt ein weiteres Beispiel einer Ausgestaltung der vorgeschlagenen Schaltungsanordnung. In diesem Beispiel ist im Unterschied zur Ausgestaltung der Figur 2 das Gate des ersten und des zweiten Leistungstransistors $Q_1$, $Q_2$ jeweils über zwei entgegengerichtete Dioden mit dem ersten Pol des Ausgangsanschlusses verbunden. Bei den beiden Dioden handelt es sich zum einen um eine Zehnerdiode $R_{z1}$ bzw. $R_{z2}$, die die Stromrichtung vom Gate zum ersten Pol sperrt. Die zweite Diode $R_{d1}$ bzw. $R_{d2}$ sperrt die entgegengesetzte Stromrichtung. Eine entsprechende Ausgestaltung ist selbstverständlich auch für die Schaltungsanordnung der Figur 3 vorteilhaft.

Die beiden Zehnerdioden $R_{z1}$ bz. $R_{z2}$ werden verwendet, um das jeweilige Gate vor zu hoher Spannung zu schützen. Es ist sinnvoll, diese Zehnerdiode einzubauen, wenn die Schwingkreisspannung größer ist als jene, die an dem Steuertransistor $Q_{S1}$ als Gatespannung anliegt. In diesem Fall wird durch die Kapazität zwischen Drain und Source an $Q_{S1}$ sowie durch die Kapazität zwischen Gate und Source an $Q_2$ ein kapazitiver Spannungsteiler gebildet. Dadurch kann die zulässige Gatespannung überschritten werden. Die Zehnerdiode verhindert dies. Werden nun die Gates der MOSFET-Steuertransistoren $Q_{S1}$ und $Q_{S2}$ nicht wie üblich mit einer konstanten Spannung versorgt, sondern durch den Schwingkreis geladen, so dauert es eine gewisse Zeit von mehreren Schwingungen, bis die Gates dieser Steuertransistoren durch den Schwingkreis in den leitenden Zustand versetzt werden. Innerhalb dieser Zeit soll die Body-Diode der MOSFET-Leistungstransistoren den Stromfluss leiten. Bei fehlender Diode $R_{d1}$ bzw. $R_{d2}$ ist aber ein weiterer Stromfluss durch die Zenerdiode und die Bodydiode des Steuertransistors möglich. In diesem Fall wird eine Parallelschaltung zweier Dioden erreicht. Leistungs-MOSFET's haben meist sehr schlechte Body-Dioden mit hoher Vorwärtsspannung, weshalb es möglich ist, dass der Strom den Weg vom ersten Pol über die Zehnerdiode $R_{z2}$ und die Body-Diode des ersten Steuertransistors $Q_{S1}$ nimmt. In diesem Fall zerstören sich die Bauteile, da diese nicht für diesen Strom ausgelegt sind. Durch die zusätzliche Diode $R_{d1}$ bzw. $R_{d2}$ wird dieser Stromfluss verhindert. In der Praxis können auch bidirektionale Zehnerdioden verwendet werden, wodurch die zwei Dioden in einem Gehäuse ausgebildet sind.

Prinzipiell lässt sich die aktive Gleichrichterschaltung der vorgeschlagenen Schaltungsanordnung nicht nur als Halbbrücke wie bei den Figuren 2 bis 4, sondern auch als Vollbrücke realisieren, wobei dann allerdings nur eine geringfügig höhere Spannung als die Ausgangsspannung des aktiven Gleichrichters für das Schalten der MOSFET-Leistungstransistoren zur Verfügung steht. Die vorgeschlagene Schaltungsanordnung lässt sich sehr vorteilhaft in induktiven Energieübertragungsstrecken auf der Sekundärseite einsetzen, insbesondere bei Nutzung einer derartigen Energieübertragungsstrecke zwischen dem Stator und dem Rotor einer Synchronmaschine.

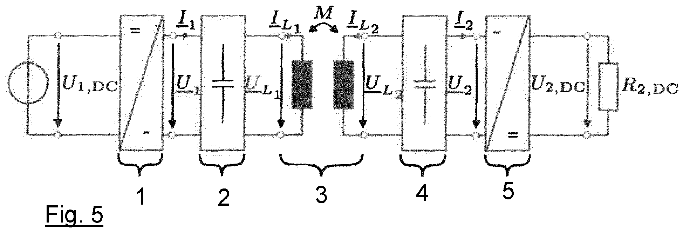

Figur 5 zeigt schematisch ein Beispiel für den Aufbau einer induktiven Energieübertragungsstrecke. Auf der Primärseite wird die Eingangsspannung $U_{1,DC}$ über den Inverter 1 in eine Wechselspannung $\underline{U}_1$ gewandelt, die über das Spulensystem 3 bestehend aus der Primärspule $L_1$ und der Sekundärspule $L_2$ auf die Sekundärseite übertragen wird. Primärspule $L_1$ und Sekundärspule $L_2$ weisen dabei eine Parallelkompensation 2, 4 auf. Die in der Sekundärspule $L_2$ induzierte Wechselspannung $\underline{U}_2$ wird über den Gleichrichter 5 gleichgerichtet und als Gleichspannung $U_{2,DC}$ bereitgestellt. Die vorgeschlagene Schaltungsanordnung mit aktiver Gleichrichterschaltung kann dabei die Sekundärspule $L_2$ als Eingangsimpedanz zusammen mit der Parallelkompensation 4 und dem Gleichrichter 5 ersetzen.

Bei geringen magnetischen Kopplungen zwischen den beiden Spulen $L_1$, $L_2$ entsteht aufgrund des LC-Schwingkreises ein Tiefpass. Dies bedeutet, dass fast keine Oberwellen im System vorhanden sind. Wird nur die Grundwelle betrachtet, existieren im System je nach Kompensation sinusförmige Ströme und Spannungen. Am Wechsel- und Gleichrichter ergeben sich daher sog. Umrichtfaktoren bzw. Formfaktoren für Strom und Spannung. Die Umrichtfaktoren werden durch die Ausführung, d. h. Halb- oder Vollbrücke beeinflusst. Bei paralleler Kompensation auf der Sekundärseite ergibt sich für eine Vollbrücke folgender Faktor für die Spannung:

$$U_{2,DC} = \frac{2 \cdot \sqrt{2}}{\pi} \cdot U_2$$

Dies bedeutet, dass die Ausgangs- bzw. Zwischenkreisspannung ca. das 0,9-fache der Schwingkreisspannung $U_2$ beträgt. Dementsprechend umgekehrt verhält sich der Strom, so dass in Summe die Leistungsbilanz konstant bleibt. Bei einer Halbbrücke, wie bei den Beispielen der Figuren 2 bis 4 ergibt sich ein Faktor von ca. dem 0,45-fachen. Wird zusätzlich anstelle des Effektivwertes der Spitzenwert betrachtet, lautet die Formel

$$U_2 = \pi \cdot U_{2,DC}$$

Diese Spannungserhöhung im Schwingkreis wird durch die vorgeschlagene Schaltungsanordnung zur Erzeugung der Gatespannung an den Steuertransistoren für das Schalten der Leistungstransistoren der aktiven Gleichrichterschaltung genutzt. Damit lässt sich auch bei höheren Strömen und damit sehr niedriger Ausgangsspannung ein genügend höher Spannungswert zum Schalten der Leistungstransistoren erzeugen.

Die vorgeschlagene Schaltungsanordnung mit aktiver Gleichrichterschaltung ist besonders vorteilhaft bei Ausgangsspannungen $U_{2,\,DC} < 20$ V. In diesem Fall ist die Spannung $U_{2,\,DC}$ über den Widerstand $R_{2,\,DC}$, bspw. den Rotorwiderstand, kleiner als die nominale Gatespannung der MOSFET-Leistungstransistoren $Q_1$ und $Q_2$. Ein aktives Schalten ist mit der gleichgerichteten Spannung daher nicht mehr möglich. Typische Gatespannungen von Leistungs-MOSFET's liegen im Bereich von 10-20 V, wobei der Durchgangswiderstand der MOSFET's mit steigender Gatespannung in der Regel stetig abnimmt. Unter 10 V treten meist hohe Verluste auf, über 20 V kann das Gate eines MOSFETs meistens nicht zerstörungsfrei aufnehmen. Auch im Spannungsbereich von $20\,V \leq U_{2,\,DC} < 100$ V kann die vorgeschlagene aktive Gleichrichterschaltung noch Vorteile bringen, da im Teillastbereich oft niedrigere Ausgangsspannungen anliegen.

Bezugszeichenliste

1 Inverter
2 Parallelkompensation
3 Spulensystem
4 Parallelkompensation
5 Gleichrichter

**Patentansprüche**

1. Schaltungsanordnung mit aktiver Gleichrichterschaltung, insbesondere auf der Sekundärseite einer induktiven Energieübertragungsstrecke, mit einer Halb- oder Vollbrücke aus Leistungstransistoren ($Q_1$, $Q_2$) zur Gleichrichtung einer in einer Eingangsinduktivität ($L_2$) der Schaltungsanordnung induzierten Wechselspannung,
bei der

 - durch eine Parallelschaltung der Eingangsinduktivität ($L_2$) mit einer ersten Kapazität ($C_{2,p}$) ein Schwingkreis gebildet wird, und
 - die Leistungstransistoren ($Q_1$, $Q_2$) so mit der Eingangsinduktivität ($L_2$) verschaltet sind, dass eine Hilfsspannung zum Schalten der Leistungstransistoren ($Q_1$, $Q_2$) aus der induzierten Wechselspannung aus dem Schwingkreis abgezweigt wird,

wobei

 - ein erster der Leistungstransistoren ($Q_1$) eine schaltbare elektrische Verbindung zwischen einer ersten Seite der Eingangsinduktivität ($L_2$) und einem ersten Pol eines Ausgangsanschlusses herstellt,
 - ein zweiter der Leistungstransistoren ($Q_2$) eine schaltbare elektrische Verbindung zwischen einer zweiten Seite der Eingangsinduktivität ($L_2$) und dem ersten Pol des Ausgangsanschlusses herstellt,
 - ein Drainanschluss eines ersten Steuertransistors ($Q_{S1}$) mit einem Drainanschluss des ersten Leistungstransistors ($Q_1$) und ein Sourceanschluss des ersten Steuertransistors ($Q_{S1}$) mit einem Gateanschluss des zweiten Leistungstransistors ($Q_2$) verbunden ist,
 - ein Drainanschluss eines zweiten Steuertransistors ($Q_{S2}$) mit einem Drainanschluss des zweiten Leistungstransistors ($Q_2$) und ein Sourceanschluss des zweiten Steuertransistors ($Q_{S2}$) mit einem Gateanschluss des ersten Leistungstransistors ($Q_1$) verbunden ist,
 - ein Mittenabgriff der Eingangsinduktivität ($L_2$) oder beide Seiten der Eingangsinduktivität ($L_2$) des Schwingkreises über jeweils eine Drosselspule ($L_{DR2}$) mit einem zweiten Pol des Ausgangsanschlusses verbunden ist oder sind, und
 - Gateanschlüsse der ersten und zweiten Steuertransistoren ($Q_{S1}$, $Q_{S2}$) über wenigstens einen Widerstand ($Ro$) und eine Diode ($R_f$) mit wenigstens einer Seite der Eingangsinduktivität ($L_2$) des Schwingkreises und über eine Parallelschaltung aus einer zweiten Kapazität ($C_0$) und einer Zenerdiode ($R_Z$) mit dem ersten Pol des Ausgangsanschlusses verbunden sind.

2. Schaltungsanordnung nach Anspruch 1, **dadurch gekennzeichnet,** **dass** die Gateanschlüsse der ersten und zweiten Steuertransistoren ($Q_{S1}$, $Q_{S2}$) jeweils über einen Widerstand ($R_0$) und eine Diode ($R_f$) mit beiden Seiten der Eingangsinduktivität ($L_2$) des Schwingkreises verbunden sind.

3. Schaltungsanordnung nach Anspruch 1 oder 2, **dadurch gekennzeichnet,** **dass** die Gateanschlüsse des ersten und zweiten Leistungstransistors ($Q_1$, $Q_2$) jeweils entweder über eine Reihenschaltung aus einer weiteren Zenerdiode ($R_{z1}$, $R_{z2}$) und einer weiteren Diode ($R_{d1}$, $R_{d2}$) oder über eine bidirektionale Zenerdiode mit dem ersten Pol des Ausgangsanschlusses verbunden sind, wobei die weitere Zenerdiode ($R_{z1}$, $R_{z2}$) bis zum Erreichen der Zenerspannung einen Stromfluss vom Gateanschluss des jeweiligen Leistungstransistors ($Q_1$, $Q_2$) zum ersten Pol und die weitere Diode ($R_{d1}$, $R_{d2}$) jeweils einen Stromfluss vom ersten Pol zum Gateanschluss des jeweiligen Leistungstransistors ($Q_1$, $Q_2$) sperrt.

4. Schaltungsanordnung nach einem der Ansprüche 1 bis 3, **dadurch gekennzeichnet,** **dass** die Steuertransistoren ($Q_{S1}$, $Q_{S2}$) MOSFETs sind.

5. Schaltungsanordnung nach einem der Ansprüche 1 bis 4, **dadurch gekennzeichnet,** **dass** die Leistungstransistoren ($Q_1$, $Q_2$) MOSFETs sind.

6. Verwendung der Schaltungsanordnung nach einem oder mehreren der vorangehenden Patentansprüche auf einem Rotor einer Synchronmaschine, bei der eine induktive Energieübertragung über die Eingangsinduktivität ($L_2$) der Schaltungsanordnung auf den Rotor erfolgt.

7. Verwendung der Schaltungsanordnung nach einem oder mehreren der Patentansprüche 1 bis 3 auf einem Rotor einer Synchronmaschine, bei der eine induktive Energieübertragung über die Eingangsinduktivität ($L_2$) der Schaltungsanordnung auf den Rotor erfolgt und die eine oder mehreren Drosselspulen ($L_{DR2}$) durch Rotorwicklungen des Rotors gebildet werden.

Fig. 1 (Stand der Technik)

Fig. 2

Fig. 3

Fig. 4

$I_1$ $I_{L_1}$ $M$ $I_{L_2}$ $I_2$

$U_{1,DC}$ $U_1$ $U_{L_1}$ $U_{L_2}$ $U_2$ $U_{2,DC}$ $R_{2,DC}$

1    2    3    4    5

Fig. 5

Europäisches
Patentamt
European
Patent Office
Office européen
des brevets

**EUROPÄISCHER RECHERCHENBERICHT**

Nummer der Anmeldung

EP 21 18 6717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | HEINRICH JORG ET AL: "Efficiency Factor Calculation for Contactless Energy Transfer Systems", 2019 IEEE WIRELESS POWER TRANSFER CONFERENCE (WPTC), IEEE, 18. Juni 2019 (2019-06-18), Seiten 130-135, XP033753522, DOI: 10.1109/WPTC45513.2019.9055684 [gefunden am 2020-04-02] * Abbildungen 1, 10 * | 1-7 | INV. H02M3/335 H02P25/022 H02M1/08 ADD. H02M3/338 |
| A | MAIER DAVID ET AL: "A Novel Power Electronics for Contactless Inductive Energy Transfer Systems", 2018 IEEE 18TH INTERNATIONAL POWER ELECTRONICS AND MOTION CONTROL CONFERENCE (PEMC), IEEE, 26. August 2018 (2018-08-26), Seiten 40-45, XP033439819, DOI: 10.1109/EPEPEMC.2018.8521752 [gefunden am 2018-11-03] * Abbildungen 1, 3 * | 1-7 | |
| A | MAIER DAVID ET AL: "Contribution to the system design of contactless energy transfer systems", 2016 IEEE INTERNATIONAL POWER ELECTRONICS AND MOTION CONTROL CONFERENCE (PEMC), IEEE, 25. September 2016 (2016-09-25), Seiten 1008-1013, XP033001780, DOI: 10.1109/EPEPEMC.2016.7752132 [gefunden am 2016-11-21] * Abbildungen 1,11 * | 1-7 | RECHERCHIERTE SACHGEBIETE (IPC) H02M H02P |

-/--

Der vorliegende Recherchenbericht wurde für alle Patentansprüche erstellt

| Recherchenort | Abschlußdatum der Recherche | Prüfer |
|---|---|---|
| Den Haag | 30. November 2021 | Kail, Maximilian |

EPO FORM 1503 03.82 (P04C03)

Seite 1 von 2

Europäisches Patentamt
European Patent Office
Office européen des brevets

**EUROPÄISCHER RECHERCHENBERICHT**

Nummer der Anmeldung

EP 21 18 6717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2006/018133 A1 (HUA LEI [US]) 26. Januar 2006 (2006-01-26) * Abbildung 2 * * Absätze [0008], [0026], [0027], [0031], [0032] * ----- | 1-7 | |
| Y | RICHARDEAU F ET AL: "New Self-Switching Converters", IEEE TRANSACTIONS ON POWER ELECTRONICS, INSTITUTE OF ELECTRICAL AND ELECTRONICS ENGINEERS, USA, Bd. 23, Nr. 2, 1. März 2008 (2008-03-01), Seiten 802-812, XP011204900, ISSN: 0885-8993 * Abbildung 4 * ----- | 1-7 | |
| A | US 2006/114697 A1 (YASUMURA MASAYUKI [JP]) 1. Juni 2006 (2006-06-01) * Absätze [0186], [0188]; Abbildung 6 * ----- | 3 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 30. November 2021 | Kail, Maximilian |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 21 18 6717**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**30-11-2021**

| Im Recherchenbericht angeführtes Patentdokument | Datum der Veröffentlichung | Mitglied(er) der Patentfamilie | Datum der Veröffentlichung |
|---|---|---|---|
| US 2006018133 A1 | 26-01-2006 | KEINE | |
| US 2006114697 A1 | 01-06-2006 | EP 1548922 A1 | 29-06-2005 |
| | | JP 2005110486 A | 21-04-2005 |
| | | KR 20060036891 A | 02-05-2006 |
| | | TW I267247 B | 21-11-2006 |
| | | US 2006114697 A1 | 01-06-2006 |
| | | WO 2005015724 A1 | 17-02-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007011745 U1